# EUROPEAN PATENT APPLICATION

(11) **EP 2 385 571 A1**
(43) Date of publication of application: **09.11.2011**
(21) Application number: 09839105.5
(22) Date of filing: 15.07.2009
(51) Int. Cl.: H01M 4/66

(54) **NONAQUEOUS ELECTROLYTE SECONDARY BATTERY, AND METHOD FOR MANUFACTURING SAME**

(30) Priority: 30.01.2009 JP 2009019979
(71) Applicant: Panasonic Corporation, Kadoma-shi Osaka 571-8501 (JP)
(72) Inventor: MURAOKA, Yoshiyuki, 2-1-61, Shiromi, Chuo-ku, Osaka 540-6207 (JP); SATO, Toshitada, 2-1-61, Shiromi, Chuo-ku, Osaka 540-6207 (JP); HINA, Yasuhiko, 2-1-61, Shiromi, Chuo-ku, Osaka 540-6207 (JP); NAGASAKI, Akira, 2-1-61, Shiromi, Chuo-ku, Osaka 540-6207 (JP)
(74) Representative: Grünecker, Kinkeldey, Stockmair & Schwanhäusser
(86) International application number: PCT/JP2009/003343
(87) International publication number: WO 2010/086913

(57) **Abstract**

A nonaqueous electrolyte secondary battery includes: a positive electrode 4 including a positive electrode current collector and a positive electrode material mixture layer containing a positive electrode active material and a binder and provided on the positive electrode current collector; a negative electrode 5; a porous insulating layer 6 interposed between the positive electrode 4 and the negative electrode 5; and a nonaqueous electrolyte. The positive electrode current collector contains aluminium. The positive electrode current collector has an average crystal grain size of 1.0 µm or more.

## Description

### TECHNICAL FIELD

The present disclosure relates to, for example, nonaqueous electrolyte secondary batteries, such as lithium ion secondary batteries, and methods for fabricating the batteries.

### BACKGROUND ART

To meet recent demands for use on vehicles in consideration of environmental issues or for employing DC power supplies for large tools, small and lightweight secondary batteries capable of performing rapid charge and large-current discharge have been required. Examples of typical secondary batteries satisfying such demands include, in particular, a nonaqueous electrolyte secondary battery employing a negative electrode active material made of lithium metal, a lithium alloy, or a lithium intercalation compound, and also employing a nonaqueous electrolyte in which lithium salt is dissolved in an aprotic organic solvent. The "lithium intercalation compound" herein is a compound in which lithium ions are intercalated in carbon serving as a host substance (which is herein a substance capable of intercalating or deintercalating lithium ions).

An electrode group in a nonaqueous electrolyte secondary battery generally includes: a negative electrode in which a negative electrode active material is supported on a negative electrode current collector; a positive electrode in which a positive electrode active material electrochemically reacting with lithium ions reversibly is supported on a positive electrode current collector; and a porous insulating layer (i.e., a separator) carrying a nonaqueous electrolyte thereon and interposed between the negative electrode and the positive electrode to prevent short-circuit from occurring between the negative electrode and the positive electrode.

The positive and negative electrodes are stacked or wound with the separator interposed therebetween, thereby forming an electrode group. This electrode group is housed in a battery case made of metal. Thereafter, the electrolyte is poured in the battery case, and then a lid is fixed to the opening end of the battery case to seal the battery case. In this manner, a nonaqueous electrolyte secondary battery is fabricated.

### CITATION LIST

### PATENT DOCUMENT

PATENT DOCUMENT 1: Japanese Patent Publication No. 2007-299724
PATENT DOCUMENT 2: Japanese Patent Publication No. H05-182692

### SUMMARY OF THE INVENTION

### TECHNICAL PROBLEM

In general, when a nonaqueous electrolyte secondary battery (which may be hereinafter simply referred to as a "battery") is destroyed by crush, short-circuit occurs in the battery, and short-circuit current causes a rapid temperature rise in the battery and might cause excessive heating in the battery. To prevent this problem, improvement in the safety of the nonaqueous electrolyte secondary battery is required. In particular, for large-size and high-power nonaqueous electrolyte secondary batteries, excessive heating is highly likely to occur and, therefore, safety improvement is strongly required.

Applicant has studied what causes short-circuit in the nonaqueous electrolyte secondary battery when the battery is destroyed by crush, to obtain the following findings. That is, among the positive and negative electrodes and the separator forming the electrode group, the positive electrode having the lowest tensile extension percentage is broken first. Then, the broken portion of the positive electrode penetrates the separator, resulting in that the positive electrode and the negative electrode are short-circuited, thereby causing short-circuit in the battery.

It is therefore an object of the present disclosure to reduce occurrence of short-circuit in a nonaqueous electrolyte secondary battery by preventing a positive electrode from being broken first even when the battery is destroyed by crush.

### SOLUTION TO THE PROBLEM

To achieve the object, in an aspect of the present disclosure, a nonaqueous electrolyte secondary battery includes: a positive electrode including a positive electrode current collector and a positive electrode material mixture layer containing a positive electrode active material and a binder and provided on the positive electrode current collector; a negative electrode; a porous insulating layer interposed between the positive electrode and the negative electrode; and a nonaqueous electrolyte, wherein the positive electrode current collector contains aluminium, and the positive electrode current collector has an average crystal grain size of 1.0 µm or more. The positive electrode current collector preferably has an average crystal grain size of 2.0 µm or more.

In the nonaqueous electrolyte secondary battery, the average crystal grain size of the positive electrode current collector is increased to 1.0 µm or more (preferably, 2.0 µm or more) to increase the tensile extension percentage of the positive electrode. Accordingly, even when the battery is destroyed by crush, the positive electrode is not broken first, thus reducing occurrence of short-circuit in the battery. As a result, the safety of the battery can be enhanced.

In addition, even when a foreign material enters the electrode group, the positive electrode is deformed according to the shape of the foreign material. Accordingly, penetration of the foreign material into the separator caused by expansion and contraction of the positive electrode and the negative electrode due to charge and discharge does not occur, and thus, short-circuit does not occur in the battery. As a result, the safety of the battery can be further enhanced.

Further, even when the positive electrode is made thick, breakage of the positive electrode in winding (or stacking) the positive electrode and the negative electrode with the separator interposed therebetween can be reduced, thereby enhancing productivity of the battery. In other words, the positive electrode can be made thick to increase the battery capacity without breakage of the positive electrode.

In the nonaqueous electrolyte secondary battery, the positive electrode preferably has a tensile extension percentage of 3.0% or more.

Preferably, in the nonaqueous electrolyte secondary battery, the negative electrode has a tensile extension percentage of 3.0% or more, and the porous insulating layer has a tensile extension percentage of 3.0% or more.

In the nonaqueous electrolyte secondary battery, the positive electrode is preferably a positive electrode including the positive electrode current collector which was rolled after being coated with positive electrode material mixture slurry containing the positive electrode active material and dried, and than was subjected to heat treatment at a predetermined temperature.

In the nonaqueous electrolyte secondary battery, the positive electrode current collector preferably contains iron and mainly contains aluminium.

This structure can reduce covering of the positive electrode active material with the binder melted in heat treatment performed after rolling, thereby reducing a decrease in the battery capacity.

In the nonaqueous electrolyte secondary battery, an amount of iron contained in the positive electrode current collector is preferably in the range from 1.20 wt. % to 1.70 wt. %, both inclusive.

To achieve the object described above, a method for fabricating a nonaqueous electrolyte secondary battery in an aspect of the present disclosure is a method for fabricating a nonaqueous electrolyte secondary battery including a positive electrode including a positive electrode current collector and a positive electrode material mixture layer containing a positive electrode active material and a binder and provided on the positive electrode current collector, a negative electrode, a porous insulating layer interposed between the positive electrode and the negative electrode, and a nonaqueous electrolyte. The method includes the steps of: (a) preparing the positive electrode; (b) preparing the negative electrode; and (c) either winding or stacking the positive electrode and the negative electrode with the porous insulating layer interposed therebetween after steps (a) and (b), wherein step (a) includes the steps of (al) coating the positive electrode current collector with positive electrode material mixture slurry containing the positive electrode active material and the binder, and drying the slurry, (a2) rolling the positive electrode current collector coated with the dried positive electrode material mixture slurry, and (a3) performing heat treatment on the positive electrode current collector coated with the dried positive electrode material mixture slurry at a predetermined temperature after step (a2), the positive electrode current collector contains aluminium, and the positive electrode current collector has an average crystal grain size of 1.0 µm or more.

In this method, heat treatment performed after rolling can obtain a positive electrode including a positive electrode current collector having an average crystal grain size of 1.0 µm or more (preferably, 2.0 µm or more) and a tensile extension percentage of 3.0% or more.

In the method, in step (a3), the predetermined temperature is preferably higher than a softening temperature of the positive electrode current collector.

In the method, the positive electrode preferably has a tensile extension percentage of 3.0% or more.

In the method, the positive electrode current collector preferably contains iron and mainly contains aluminium.

With this method, the heat treatment period necessary for increasing the tensile extension percentage of the positive electrode to 3.0% or more and/or the heat treatment temperature necessary for increasing the tensile extension percentage of the positive electrode to 3.0% or more can be reduced. Thus, it is possible to reduce covering of the positive electrode active material with the binder melted in the heat treatment performed after rolling.

In the method, in step (a3), a heated roll heated to the predetermined temperature and the positive electrode current collector coated with the dried positive electrode material mixture slurry are preferably brought into contact with each other.

With this method, heat can be effectively supplied to the positive electrode current collector coated with dried positive electrode material mixture slurry, thereby reducing the heat treatment period. Accordingly, it is possible to reduce covering of the positive electrode active material with the binder melted in the heat treatment.

Preferably, in the method, the positive electrode current collector contains no iron, and in step (a3), the predetermined temperature is in the range from 250°C to 300°C, both inclusive, and a period during which the heat treatment is performed is in the range from one hour to five hours, both inclusive.

Preferably, in the method, the positive electrode current collector contains iron, and in step (a3), the predetermined temperature is in the range from 160°C to 300°C, both inclusive, and a period during which the heat treatment is performed is in the range from 0.1 second to 20 seconds, both inclusive.

### ADVANTAGES OF THE INVENTION

The present disclosure can provide a nonaqueous electrolyte secondary battery with high safety, high productivity, and large capacity.

### BRIEF DESCRIPTION OF THE DRAWINGS

[FIG. 1] FIG. 1 is a cross-sectional view illustrating a structure of a nonaqueous electrolyte secondary battery according to an embodiment of the present disclosure.
[FIG. 2] FIG. 2 is a cross-sectional view schematically illustrating a structure of an electrode group in the nonaqueous electrolyte secondary battery of the embodiment.
[FIG. 3] FIGS. 3(a) and 3(b) are views showing a foreign material entering test.

### DESCRIPTION OF EMBODIMENTS

Appl icant has studied a method for increasing the tensile extension percentage of a positive electrode, to find the followings. That is, a positive electrode current collector obtained by coating an aluminium-containing positive electrode current collector with positive electrode material mixture slurry, drying, and then rolling this positive electrode current collector, is subjected to heat treatment at a temperature higher than a softening temperature of the positive electrode current collector, the tensile extension percentage of the positive electrode can be increased.

In addition, Applicant has found that an increase in the tensile extension percentage of the positive electrode to a predetermined percentage (specifically, 3.0%, for example) or more can prevent occurrence of short-circuit in a battery destroyed by crush.

A mechanism in which each of a positive electrode not subjected to heat treatment after rolling and a positive electrode subjected to heat treatment after rolling is extended by stretching will be explained hereinafter.

In the case where the positive electrode not subjected to heat treatment after rolling is extended by stretching, when a large crack occurs in the positive electrode material mixture layer, and at the same time, the positive electrode is broken. This is because of the following reasons. As the positive electrode is extended, tensile stress on the positive electrode material mixture layer increases, and tensile stress applied on the positive electrode current collector also increases. When a large crack occurs in the positive electrode material mixture layer, tensile stress applied on the positive electrode current collector concentrates on the portion where the large crack occurs. Accordingly, simultaneously with occurrence of the crack, the positive electrode current collector is broken, resulting in breakage of the positive electrode.

On the other hand, in the case where the positive electrode subjected to heat treatment after rolling is extended by stretching, the positive electrode continues to extend with a large number of fine cracks created in the positive electrode material mixture layer, and then, the positive electrode is broken. This is because of the following reasons. Tensile stress on the positive electrode current collector is dispersed to portions where the large number of fine cracks occur. Accordingly, the influence of occurrence of the cracks on the positive electrode current collector is small, and thus, the positive electrode current collector is not broken simultaneously with occurrence of the cracks. Consequently, even after the occurrence of the cracks, the positive electrode continues to extend. Then, at the time when the dispersed tensile stress exceeds a degree X, the positive electrode current collector is broken, resulting in breakage of the positive electrode. The "degree X" is a degree of stress necessary for breakage of the positive electrode current collector formed on each surface of the positive electrode material mixture layer in which the large number of fine cracks occur. For example, the "degree X" is near a degree of stress necessary for breakage of the positive electrode current collector in the case where the positive electrode is extended by stretching only the positive electrode current collector.

As described above, the mechanism of extension of the positive electrode by stretching differs between the positive electrode not subjected to heat treatment after rolling and the positive electrode subjected to heat treatment after rolling. Thus, the positive electrode subjected to heat treatment after rolling has a tensile extension percentage higher than that of the positive electrode not subjected to heat treatment after rolling.

In addition, as described above, since the positive electrode has a structure in which a positive electrode material mixture layer is formed on each surface of the positive electrode current collector, the tensile extension percentage of the positive electrode is not limited only by the tensile extension percentage of the positive electrode current collector.

Further, Applicant has found that heat treatment performed to increase the tensile extension percentage of the positive electrode needs to be carried out after the rolling. If the heat treatment is carried out before the rolling, the tensile extension percentage of the positive electrode can be increased in the heat treatment, but the tensile extension percentage of the positive electrode decreases in rolling performed after the heat treatment, resulting in that the tensile extension percentage of the positive electrode cannot be increased eventually.

The inventors studied properties of such a positive electrode (i.e., a positive electrode including an aluminium-containing positive electrode current collector and having a tensile extension percentage increased to 3.0% or more by performing heat treatment thereon after rolling), to find that the positive electrode current collector has an average crystal grain size of 1.0 µm or more. Specifically, in the positive electrode whose tensile extension percentage has been increased to 3.0% or more, the positive electrode current collector has an average crystal grain size of 1.0 µm or more (preferably, 2.0 µm or more) (see, Table 1 below), i.e., the positive electrode current collector has a relatively large average crystal grain size. On the other hand, in the positive electrode having a tensile extension percentage less than 3.0%, the positive electrode current collector has an average crystal grain size of 0.5 µm (see, Table 2 below), i.e., the positive electrode current collector has a relatively small average crystal grain size.

From the foregoing finding, the heat treatment performed after rolling can increase the average crystal grain size of the positive electrode current collector to 1.0 µm or more, and increase the tensile extension percentage of the positive electrode to 3.0% or more. That is, an increase in the average crystal grain size of the positive electrode current collector can increase the tensile extension percentage of the positive electrode.

A further study of the inventors shows that even when heat treatment is performed before rolling to increase the average crystal grain size of the positive electrode current collector to 1.0 µm or more, the rolling performed after the heat treatment increases crystal strain in the positive electrode current collector, and thus, the tensile extension percentage of the positive electrode decreases. Therefore, the tensile extension percentage of the positive electrode can be increased by (1) an increase in the average crystal grain size of the positive electrode current collector and (2) a decrease in crystal strain in the positive electrode current collector.

In view of this finding, according to the present disclosure, the use of a positive electrode (i.e., a positive electrode subjected to heat treatment after rolling) including a positive electrode current collector having an average crystal grain size of 1.0 µm or more and having its tensile extension percentage increased to 3.0% or more can prevent occurrence of short-circuit in the battery even when the battery is destroyed by crush.

In order to prevent a decrease in a cycle retention rate caused by corrosion of the aluminium positive electrode current collector, a technique using a positive electrode current collector made of an aluminium material and subjected to heat treatment at a predetermined temperature is proposed (see, Patent Document 1, for example). This technique can provide an aluminium positive electrode current collector with a high corrosion resistance. In the technique described in Patent Document 1, a positive electrode is formed in the following manner. First, a positive electrode current collector made of an aluminium material and subjected to heat treatment at a predetermined temperature is prepared beforehand. Next, this positive electrode current collector is coated with positive electrode material mixture slurry, and the slurry is dried. Then, the resultant positive electrode current collector is rolled, thereby forming a positive electrode.

To reduce pe eling of an electrode material from the current collector in stacking or winding the electrodes or to reduce a decrease in adhesiveness of the electrode material to the current collector, a technique of performing heat treatment on the positive or negative electrode at a temperature higher than a recrystallizing temperature of a binder and lower than a decomposition temperature of the binder before stacking or winding the positive and negative electrodes and a porous insulating layer to be interposed between these electrodes, for example, is also proposed (see, Patent Document 2, for example).

An embodiment of the present disclosure will be described hereinafter with reference to the drawings.

### (Embodiment)

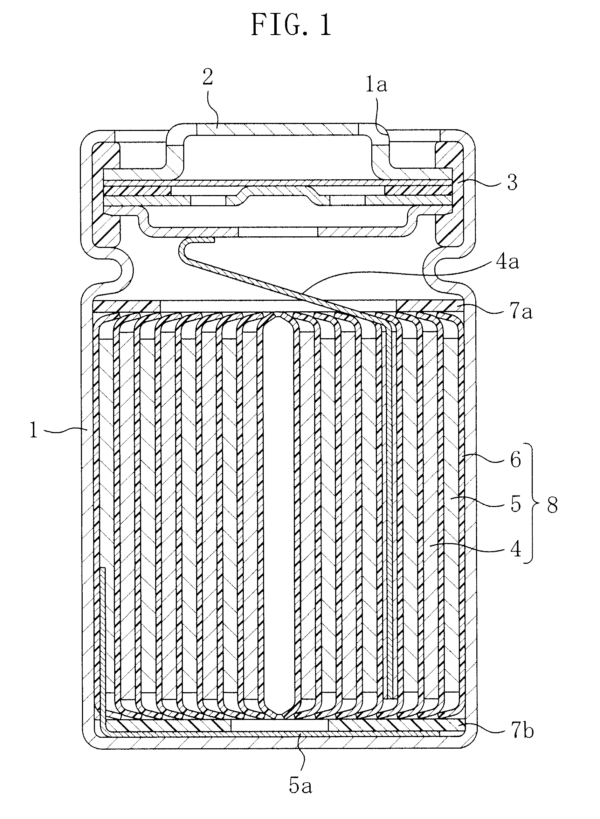

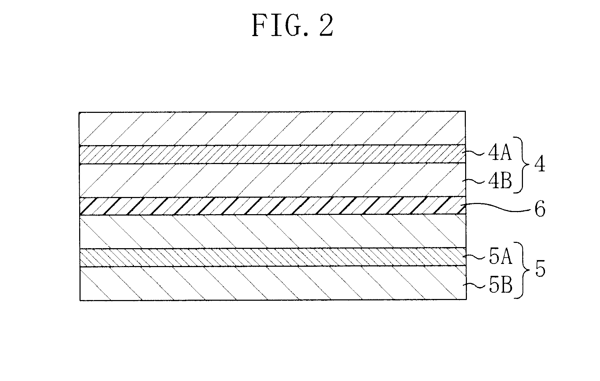

A nonaqueous electrolyte secondary battery according to an embodiment of the present disclosure will be described hereinafter with reference to FIGS. 1 and 2.

### - Structure of Nonaqueous Electrolyte Secondary Battery-

A structure of the nonaqueous electrolyte secondary battery of the embodiment is described with reference to FIG. 1. FIG. 1 is a cross-sectional view illustrating a structure of the nonaqueous electrolyte secondary battery of the embodiment.

As illustrated in FIG. 1, an electrode group 8 in which a positive electrode 4 and a negative electrode 5 are wound with a separator (i.e., a porous insulating layer) 6 interposed therebetween is housed in a battery case 1 with a nonaqueous electrolyte. An opening la of the battery case 1 is sealed by a sealing plate 2 with a gasket 3 interposed therebewtween. A positive electrode lead 4a attached to the positive electrode 4 is connected to the sealing plate 2 also serving as a positive electrode terminal. A negative electrode lead 5a attached to the negative electrode 5 is connected to the battery case 1 also serving as a negative electrode terminal. An upper insulating plate 7a is placed on the upper end of the electrode group 8, and a lower insulating plate 7b is placed on the lower end of the electrode group 8.

### - Structure of Electrode Group-

A structure of an electrode group in the nonaqueous electrolyte secondary battery of the embodiment is described with reference to FIG. 2. FIG. 2 is an enlarged cross-sectional view schematically illustrating a structure of the electrode group in the nonaqueous electrolyte secondary battery of the embodiment.

As illustrated in FIG. 2, the separator 6 is interposed between the positive electrode 4 and the negative electrode 5.

The positive electrode 4 includes a positive electrode current collector 4A and a positive electrode material mixture layer 4B formed on each surface of the positive electrode current collector 4A. The positive electrode material mixture layer 4B contains a positive electrode active material, and preferably also contains a binder and a conductive agent, for example.

The negative electrode 5 includes a negative electrode current collector 5A and a negative electrode material mixture layer 5B formed on each surface of the negative electrode current collector 5A. The negative electrode material mixture layer 5B contains a negative electrode active material, and preferably also includes a binder and a conductive agent, for example.

The positive electrode 4 is a positive electrode subjected to heat treatment after rolling. The positive electrode 4 has a tensile extension percentage of 3.0% or more.

The positive electrode current collector 4A contains iron and mainly contains aluminium. The positive electrode current collector 4A has an average crystal grain size of 1.0 µm or more. The positive electrode current collector 4A preferably has an average crystal grain size of 2.0 µm or more. The amount of iron contained in the positive electrode current collector 4A is preferably in the range from 1.20 weight percent (wt. %) to 1.70 wt. %, both inclusive. The positive electrode current collector "containing iron and mainly containing aluminium" herein is a positive electrode current collector which contains iron as an accessory component and aluminium as a principal component and in which the amount of aluminium is larger than that of iron. Examples of a positive electrode current collector containing iron and mainly containing aluminium include a positive electrode current collector containing only iron and aluminium and a positive electrode current collector containing a trace amount of other metal in addition to iron and aluminium.

The negative electrode 5 has a tensile extension percentage of 3.0% or more. The separator 6 has a tensile extension percentage of 3.0% or more.

A study of Applicant on heat treatment performed after rolling shows the following. When the heat treatment is performed at a high temperature and/or for a long period, the high-temperature heat treatment and/or the long-period heat treatment can increase the tensile extension percentage of the positive electrode to a predetermined percentage or more. However, in this case, the binder melted in the heat treatment covers the positive electrode active material, thereby causing a new problem of a decrease in the battery capacity.

To solve this problem, Applicant has intensively studied means for reducing the heat treatment temperature and/or the heat treatment period, to find the following. The use of a positive electrode current collector containing iron and mainly containing aluminium can reduce the heat treatment temperature necessary for increasing the tensile extension percentage of the positive electrode to a predetermined percentage or more and/or can reduce the heat treatment period necessary for increasing the tensile extension percentage of the positive electrode to a predetermined percentage or more.

Thus, in this embodiment, a positive electrode current collector containing iron and mainly containing aluminium is used as a positive electrode current collector. Accordingly, it is possible to reduce covering of the positive electrode active material with the binder melted in the heat treatment, thereby reducing a decrease in the battery capacity.

### < Tensile Extension Percentage>

The "tensile extension percentage" herein is a proportion of a positive electrode immediately before being broken to a positive electrode before being extended. Specifically, the tensile extension percentage is measured in, for example, the following manner. An end of a sample positive electrode formed by using the positive electrode and having a width of 15 mm and a length of 20 mm is fixed, and the other end of the sample positive electrode is extended along the longitudinal direction thereof at a speed of 20 mm/min. Then, the length of the sample positive electrode immediately before breakage is measured. Using the length (i.e., 20 mm) of the sample positive electrode before being extended and the length of the sample positive electrode immediately before breakage, the tensile extension percentage of the positive electrode is calculated.

### <Average Crystal Grain Size>

Here, the "average crystal grain size" is measured in, for example, the following manner. A battery subjected to charge and discharge is disassembled, and a positive electrode is taken out. In this positive electrode, the cross section of the positive electrode current collector is processed with a focused ion beam (FIB) SMI9800 produced by SII NanoTechnology Inc. The processed cross-section is tilted, and a scanning ion microscope image (SIM) thereof is observed to measure the crystal grain size of the positive electrode current collector. In this manner, the average crystal grain size is obtained.

A method for fabricating a nonaqueous electrolyte secondary battery according to an embodiment of the present disclosure will be described hereinafter.

### <Formation of Positive Electrode >

First, positive electrode material mixture slurry containing a positive electrode active material, a binder, and a conductive agent, for example, is prepared. Next, the positive electrode material mixture slurry is applied onto the positive electrode current collector, and the slurry is dried. Then, the positive electrode current collector coated with the dried positive electrode material mixture slurry is rolled, thereby obtaining a positive electrode plate with a predetermined thickness. Thereafter, the positive electrode plate (i.e., the rolled positive electrode current collector coated with the dried positive electrode material mixture slurry) is subjected to heat treatment at a predetermined temperature. Subsequently, the positive electrode plate is cut to have a predetermined width and a predetermined length, thereby obtaining a positive electrode with a predetermined thickness, a predetermined width, and a predetermined length.

The heat treatment after rolling is performed in the following manner. First, for example, the positive electrode plate and a heated roll heated to a predetermined temperature are brought into contact with each other, thereby performing the heat treatment. Second, for example, the positive electrode plate is exposed to hot air at a predetermined temperature, thereby performing the heat treatment. The heat treatment using heated roll can supply heat to the positive electrode plate more effectively than the heat treatment using hot air, and thus, the heat treatment period can be reduced, thereby reducing coverage of the positive electrode active material with the melted binder. For this reason, the heat treatment using heated roll is preferably employed as a heat treatment method.

The heat treatment temperature herein is higher than the softening temperature of the positive electrode current collector. The heat treatment temperature is preferably lower than the decomposition temperature of the binder. The lower limit of the heat treatment period is a period necessary for increasing the tensile extension percentage of the positive electrode to 3.0% or more. On the other hand, the upper limit of the heat treatment period is preferably determined in consideration of the amount of the binder melted in the heat treatment. Specifically, for example, in the case of using a positive electrode current collector containing iron and mainly containing aluminium, the heat treatment temperature is preferably in the range from 160°C to 300°C, both inclusive, and the heat treatment period is preferably in the range from 0.1 second to 20 seconds, both inclusive.

### <Formation of Negative Electrode>

First, negative electrode material mixture slurry containing a negative electrode active material and a binder is prepared. Next, the negative electrode material mixture slurry is applied onto a negative electrode current collector, and the slurry is dried. Then, the negative electrode current collector coated with the dried negative electrode material mixture slurry is rolled, thereby obtaining a negative electrode plate with a predetermined thickness. Thereafter, the negative electrode plate is cut to have a predetermined width and a predetermined length, thereby forming a negative electrode with a predetermined thickness, a predetermined width, and a predetermined length.

To ensure that the negative electrode has a tensile extension percentage of 3.0% or more, the negative electrode plate may be subjected to heat treatment at a predetermined temperature after rolling. In this case, the heat treatment temperature is preferably 200°C, for example. In addition, in this case, if rolled copper foil is used as a negative electrode current collector, a lower-temperature heat treatment and/or a shorter-period heat treatment than in the case of using electrolytic copper foil can increase the tensile extension percentage of the negative electrode to 3.0% or more. Thus, rolled copper foil is preferably used as a negative electrode current collector.

### <Method for Fabri cating Battery>

First, as illustrated in FIG. 1, a positive electrode lead 4a is attached to a positive electrode current collector (see, 4A in FIG. 2), and a negative electrode lead 5a is attached to a negative electrode current collector (see, 5A in FIG. 2). Then, a positive electrode 4 and a negative electrode 5 are wound with a separator 6 interposed therebetween, thereby forming an electrode group 8. Thereafter, an upper insulating plate 7a is placed on the upper end of the electrode group 8, and a lower insulating plate 7b is placed on the lower end of the electrode group 8. Subsequently, the negative electrode lead 5a is welded to a battery case 1, and the positive electrode lead 4a is welded to a sealing plate 2, thereby housing the electrode group 8 in the battery case 1. Then, a nonaqueous electrolyte is poured in the battery case 1. Lastly, an opening end 1 a of the battery case 1 is sealed by the sealing plate 2 with a gasket 3 interposed therebetween. In this manner, a battery is fabricated.

In this embodiment, the average crystal grain size of the positive electrode current collector is increased to 1.0 µm or more (preferably, 2.0 µm or more), and the tensile extension percentage of the positive electrode is increased (preferably, the tensile extension percentage of the positive electrode is increased to 3.0% or more). In this manner, even when the battery is destroyed by crush, the positive electrode is not broken first, thereby reducing occurrence of short-circuit in the battery. As a result, the safety of the battery can be enhanced.

The tensile extension percentage of each of the negative electrode 5 and the separator 6 is also preferably 3.0% or more, as in the positive electrode 4. This is because of the following reasons. First, for example, even if the tensile extension percentages of the positive electrode and the separator are 3.0% or more, as long as the tensile extension percentage of the negative electrode is less than 3.0%, the negative electrode is broken first upon destruction of the battery by crush, and as a result, short-circuit occurs in the battery. Second, for example, even if the tensile extension percentages of the positive electrode and the negative electrode are 3.0% or more, as long as the tensile extension percentage of the separator is less than 3.0%, the separator is broken first upon destruction of the battery by crush, and as a result, short-circuit occurs in the battery.

In addition, in this embodiment, even when a foreign material enters **the** electrode group, the positive electrode is deformed according to the shape of the foreign material. Accordingly, penetration of the foreign material into the separator causing short-circuit between the positive electrode and the negative electrode due to expansion and contraction of the positive electrode and the negative electrode due to charge and discharge does not occur, and thus, occurrence of short-circuit in the battery can be reduced. As a result, the safety of the battery can be further enhanced.

Further, even when the positive electrode is made thick, breakage of the positive electrode in winding (or stacking) the positive electrode and the negative electrode with the separator interposed therebetween can be reduced, thereby enhancing productivity of the battery. In other words, the positive electrode can be made thick to increase the battery capacity without breakage of the positive electrode.

Furthermore, the use of the positive electrode current collector containing iron and mainly containing aluminium can reduce the heat treatment period necessary for increasing the tensile extension percentage of the positive electrode to 3.0% or more and/or reduce the heat treatment temperature necessary for increasing the tensile extension percentage of the positive electrode to 3.0% or more. Thus, it is possible to reduce covering of the positive electrode active material with the binder melted in the heat treatment after rolling, thereby reducing a decrease in the battery capacity.

In this embodiment, a specific example of using the positive electrode current collector containing iron and mainly containing aluminium in order to reduce covering of the positive electrode active material with the binder melted in the heat treatment, has been described. However, the present disclosure is not limited to this example.

For example, a positive electrode current collector containing no iron and made of high-purity aluminium may be used. In this case, the heat treatment temperature is preferably in the range from 250°C to 300°C, both inclusive, and the heat treatment period is preferably in the range from one hour to five hours, both inclusive.

In this embodiment, as illustrated in FIG. 1, a specific example of using the electrode group 8 formed by winding the positive electrode 4 and the negative electrode 5 with the separator 6 interposed therebetween has been described. However, the present disclosure is not limited to this example. For example, an electrode group formed by stacking the positive electrode and the negative electrode with the separator interposed therebetween may be employed.

Materials for the positive electrode material mixture layer 4B included in the positive electrode 4, the negative electrode current collector 5A and the negative electrode material mixture layer 5B included in the negative electrode 5, the separator 6, and the nonaqueous electrolyte will be described hereinafter. Materials for the positive electrode material mixture layer 4B, the negative electrode current collector 5A, the negative electrode material mixture layer 5B, the separator 6, and the nonaqueous electrolyte are not specifically limited, and known materials may be used.

### <Positive Electrode Current Collector>

As the positive electrode current collector 4A, a long porous conductive substrate or a long non-porous conductive substrate is used. As described above, the positive electrode current collector 4A preferably contains iron and mainly contains aluminium. The amount of iron contained in the positive electrode current collector 4A is preferably in the range from 1.20 wt. % to 1.70 wt. %, both inclusive. Although not specifically limited, the thickness of the positive electrode current collector 4A is preferably in the range from 1 µm to 500 µm, both inclusive, and more preferably in the range from 10 µm to 20 µm, both inclusive. This structure can reduce the weight of the positive electrode 4, while maintaining the strength of the positive electrode 4.

### <Positive Electrode Material Mixture Layer>

### -Positive Electrode Active Material-

Examples of the positive electrode active material contained in the positive electrode material mixture layer 4B include lithium-containing compounds such as LiCoO₂, LiNiO_{2,} LiMnO₂, LiCoNiO₂ LiCoMO_{z}, LiNiMO_{z}, LiMn₂O₄, LiMnMO₄, LiMePO₄, and Li₂MePO₄F (where M is at least an element selected from the group consisting of Na, Mg, Sc, Y, Mn, Fe, Co, Ni, Cu, Zn, Al, Cr, Pb, Sb, and B). Examples of the positive electrode active material include a material in which the material listed above is partially substituted with an element of a different type. In addition, the positive electrode active material may be a positive electrode active material subjected to a surface process using a metal oxide, a lithium oxide, or a conductive agent, for example. Examples of this surface process include hydrophobization.

### - Binder-

Examples of the binder included in the positive electrode material mixture layer 4B include polyvinylidene fluoride (PVDF), polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinyl pyrrolidone, polyether, polyether sulphone, hexafluoropolypropylene, styrene-butadiene rubber, and carboxymethyl cellulose. Examples of the binder also include a copolymer of two or more materials selected from the group consisting of tetrafluoroethylene, hexafluoroethylene, hexafluoropropylene, perfluoroalkylvinylether, vinylidene fluoride, chlorotrifluoroethylene, ethylene, propylene, pentafluoropropylene, fluoromethylvinylether, acrylic acid, and hexadiene, and a mixture of two or more materials selected from these materials.

### - Conductive Agent-

Examples of the conductive agent contained in the positive electrode material mixture layer 4B include graphites such as natural graphite and artificial graphite, carbon blacks such as acetylene black (AB), Ketjen black, channel black, furnace black, lamp black, and thermal black, conductive fibers such as carbon fiber and metal fiber, metal powders such as carbon fluoride and aluminium, conductive whiskers such as zinc oxide and potassium titanate, conductive metal oxides such as titanium oxide, and organic conductive materials such as a phenylene derivative.

### <Negative Electrode Current Collector>

As the negative electrode current collector 5A, a long porous conductive substrate or a long non-porous conductive substrate is used. The negative electrode current collector 5A is made of, for example, stainless steel, nickel, or copper. Although not specifically limited, the thickness of the negative electrode current collector 5A is preferably in the range from 1 µm to 500 µm, both inclusive, and more preferably in the range from 10 µm to 20 µm, both inclusive. This structure can reduce the weight of the negative electrode 5, while maintaining the strength of the negative electrode 5.

### <Negative Electrode Material Mixture Layer>

### -Negative Electrode Active Material-

Examples of the negative electrode active material contained in the negative electrode material mixture layer 5B include metal, metal fiber, a carbon material, oxide, nitride, a tin compound, a silicon compound, and various alloys. Examples of the carbon material include various natural graphites, coke, partially-graphitized carbon, carbon fiber, spherical carbon, various artificial graphites, and amorphous carbon.

Since simple substances such as silicon (Si) and tin (Sn), silicon compounds, and tin compounds have high capacitance densities, it is preferable to use silicon, tin, a silicon compound, or a tin compound, for example, as the negative electrode active material. Examples of the silicon compound include SiOₓ (where 0.05 < x < 1.95) and a silicon alloy and a silicon solid solution obtained by substituting part of Si forming SiOₓ (where 0.05 < x < 1.95) with at least one of the elements selected from the group consisting of B, Mg, Ni, Ti, Mo, Co, Ca, Cr, Cu, Fe, Mn, Nb, Ta, V, W, Zn, C, N, and Sn. Examples of the tin compound include Ni₂Sn₄, Mg₂Sn, SnOₓ (where 0 < x < 2), SnO₂ and SnSiO₃. One of the examples of the negative electrode active material may be used solely or two or more of them may be used in combination.

### <Separator>

Examples of the separator 6 include a microporous thin film, woven fabric, and nonwoven fabric each of which has a high ion permeability, a predetermined mechanical strength, and a predetermined insulation property. In particular, polyolefin such as polypropylene or polyethylene is preferably used as the separator 6 because polyolefin has high durability and a shutdown function, and thus, the safety of the battery can be enhanced. The thickness of the separator 6 is generally in the range from 10 µm to 300 µm, both inclusive, and preferably in the range from 10 µm to 40 µm, both inclusive. The thickness of the separator 6 is more preferably in the range from 15 µm to 30 µm, both inclusive, and much more preferably in the range from 10 µm to 25 µm, both inclusive. In the case of using a microporous thin film as the separator 6, this microporous thin film may be a single-layer film made of a material of one type, or may be a composite film or a multilayer film made of one or more types of materials. The porosity of the separator 6 is preferably in the range from 30% to 70%, both inclusive, and more preferably in the range from 35% to 60%, both inclusive. The "porosity" herein is the volume ratio of pores to the total volume of the separator.

### <Nonaqueous Electrolyte>

The nonaqueous electrolyte contains an electrolyte and a nonaqueous solvent in which this electrolyte is dissolved. The amount of the electrolyte dissolved in the nonaqueous solvent is preferably in the range from 0.5 mol/m³ to 2 mol/m³, both inclusive.

### -Nonaqueous Solvent-

As the nonaqueous solvent, a known nonaqueous solvent may be used. The type of this nonaqueous solvent is not specifically limited, and examples of the nonaqueous solvent include cyclic carbonic ester, chain carbonic ester, and cyclic carboxylate ester. Cyclic carbonic ester may be propylene carbonate (PC) or ethylene carbonate (EC), for example. Chain carbonic ester may be diethyl carbonate (DEC), ethylmethyl carbonate (EMC), or dimethyl carbonate (DMC), for example. Cyclic carboxylate ester may be γ-butyrolactone (GBL) or γ-valerolactone (GVL). One of the examples of the nonaqueous solvent may be used solely or two or more of them may be used in combination.

### - Electrolyte -

Examples of the electrolyte include LiClO₄ LiBF₄, LiPF₆, LiAlCl₄, LiSbF₆, LiSCN, LiCF₃SO₃, LiCF₃CO₂, LiAsF₆, LiB₁₀Cl₁₀, lower aliphatic lithium carboxylate, LiCl, LiBr, LiI, chloroborane lithium, borates, and imidates. Examples of the borates include bis(1,2-benzene diorate(2-)-O,O')lithium borate, bis(2,3-naphthalene diorate(2-)-O,O')lithium borate, bis(2,2'-biphenyl diorate(2-)-O,O')lithium borate, and bis(5-fluoro-2-orate-1-benzenesulfonic acid-O,O')lithium borate. Examples of the imidates include lithium bistrifluoromethanesulfonimide ((CF₃SO₂)₂NLi), lithium trifluoromethanesulfonate nonafluorobutanesulfonimide (LiN(CF₃SO₂)(C₄F₉SO₂)), and lithium bispentafluoroethanesulfonimide ((C₂F₅SO₂)₂NLi). One of these electrolytes may be used solely or two or more of them may be used in combination.

The nonaqueous electrolyte may contain an additive which is decomposed on the negative electrode and forms thereon a coating having high lithium ion conductivity to enhance the charge/discharge efficiency of the battery, for example, in addition to the electrolyte and the nonaqueous solvent. Examples of the additive include vinylene carbonate (VC), 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinyl ethylene carbonate (VEC), and divinyl ethylene carbonate. As the additive, one of the materials may be used solely or two or more of them may be used in combination. Among the materials listed above, at least one selected from the group consisting of vinylene carbonate, vinyl ethylene carbonate, and divinyl ethylene carbonate is preferably contained. In the above-listed materials for the additive, hydrogen atoms may be partially substituted with fluorine atoms.

The nonaqueous electrolyte may further contain, for example, a known benzene derivative which is decomposed during overcharge and forms a coating on the electrode to inactivate the battery, in addition to the electrolyte and the nonaqueous solvent. The benzene derivative preferably includes a phenyl group and a cyclic compound group adjacent to the phenyl group. Examples of the benzene derivative include cyclohexylbenzene, biphenyl, and diphenyl ether. Examples of the cyclic compound group included in the benzene derivative include a phenyl group, a cyclic ether group, a cyclic ester group, a cycloalkyl group, and a phenoxy group. As the benzene derivative, one of the materials listed above may be used solely or two or more of them may be used in combination. However, the content of the benzene derivative in the nonaqueous solvent is preferably 10 volume percent (vol. %) or less of the total volume of the nonaqueous solvent.

Examples 1 and 2 and Comparative Examples 1 and 2 will be described hereinafter.

### <Example 1>

### (Battery 1)

### (Formation of Positive Electrode)

First, LiNi_{0.82}2Co_{0.15}Al_{0.03}O₂ having an average particle diameter of 10 µm was prepared.

Next, 4.5 vol. % of acetylene black as a conductive agent, a solution in which 4.7 vol. % of polyvinylidene fluoride (PVDF) as a binder was dissolved in a N-methyl pyrrolidone (NMP) solvent, and 100 parts by weight (pbw) of LiNi_{0.82}Co_{0.15}Al_{0.03}O₂ as a positive electrode active material were mixed, thereby obtaining positive electrode material mixture slurry. This positive electrode material mixture slurry was applied onto both surfaces of aluminium foil (specifically, aluminium alloy foil, BESPA FS115 (A8021H-H18), which will be hereinafter referred to as "A8021," containing 1.44 wt. % of iron, having a softening temperature of 160°C, and produced by SUMIKEI ALUMINUM FOIL, Co., Ltd.) containing iron, mainly containing aluminium, and having a thickness of 15 µm as a positive electrode current collector, and the slurry was dried. Thereafter, the resultant positive electrode current collector whose both surfaces were coated with the dried positive electrode material mixture slurry was rolled, thereby obtaining a positive electrode plate having a thickness of 0.178 mm. This positive electrode plate was then brought into contact with a heated roll produced by TOKUDEN Co., Ltd. and heated to 165°C, thereby performing heat treatment on the positive electrode plate for 60 seconds. Subsequently, the positive electrode plate was cut to have a width of 57.5 mm and a length of 503 mm, thereby obtaining a positive electrode having a thickness of 0.178 mm, a width of 57.5 mm, and a length of 503 mm.

### (Formation of Negative Electrode)

First, flake artificial graphite was ground and classified to have an average particle diameter of about 20 µm.

Then, 1 pbw of styrene butadiene rubber as a binder and 100 pbw of a solution containing 1 wt. % of carboxymethyl cellulose were added to 100 pbw of flake artificial graphite as a negative electrode active material, and these materials were mixed, thereby obtaining negative electrode material mixture slurry. This negative electrode material mixture slurry was then applied onto both surfaces of copper foil with a thickness of 8 µm as a negative electrode current collector, and the slurry was dried. Thereafter, the resultant negative electrode current collector whose both surfaces were coated with the dried negative electrode material mixture slurry was rolled, thereby obtaining a negative electrode plate having a thickness of 0.210 mm. This negative electrode plate was subjected to heat treatment in a nitrogen atmosphere at 190°C for 5 hours. The negative electrode plate was then cut to have a width of 58.5 mm and a length of 510 mm, thereby obtaining a negative electrode with a thickness of 0.210 mm, a width of 58.5 mm, and a length of 510 mm. This negative electrode had a tensile extension percentage of 5% (i.e., 3% or more).

### (Preparation of Nonaqueous Electrolyte)

To a solvent mixture of ethylene carbonate, ethyl methyl carbonate, and dimethyl carbonate in the volume ratio of 1 : 1 : 8 as a nonaqueous solvent, 3 wt. % of vinylene carbonate was added as an additive for increasing the charge/discharge efficiency of the battery, and LiPF₆ as an electrolyte was dissolved in an amount of 1.4 mol/m³, thereby obtaining a nonaqueous electrolyte solution.

### (Formation of Cylindrical Battery)

First, a positive electrode lead made of aluminium was attached to the positive electrode current collector, and a negative electrode lead made of nickel was attached to the negative electrode current collector. Then, the positive electrode and the negative electrode were wound with a polyethylene separator (specifically, a separator having a tensile extension percentage of 8% (i.e., 3% or more)) interposed therebetween, thereby forming an electrode group. Thereafter, an upper insulating plate was placed at the upper end of the electrode group, and a lower insulating plate was placed at the bottom end of the electrode group. Subsequently, the negative electrode lead was welded to a battery case, and the positive electrode lead was welded to a sealing plate including a safety valve operated with inner pressure, thereby housing the electrode group in the battery case. Then, a nonaqueous electrolyte was poured in the battery case under a reduced pressure. Lastly, an opening end of the battery case was sealed with the sealing plate with a gasket interposed therebetween, thereby fabricating a battery.

The positive electrode plate was brought into contact with a heated roll at 165°C (i.e., higher than the softening temperature, i.e., 160°C, of the positive electrode current collector), thereby performing heat treatment on the positive electrode plate for 60 seconds. In this manner, a battery including the positive electrode subjected to heat treatment was fabricated. This battery will be hereinafter referred to as a battery 1.

### (Battery 2)

A battery 2 was fabricated in the same manner as the battery 1 except that heat treatment was performed on the positive electrode plate by bringing the positive electrode plate into contact with a heated roll at 165°C for 5 hours in (Formation of Positive Electrode).

### (Battery 3)

A battery 3 was fabricated in the same manner as the battery 1 except that heat treatment was performed on the positive electrode plate by bringing the positive electrode plate into contact with a heated roll at 170°C for 20 seconds in (Formation of Positive Electrode).

### (Battery 4)

A battery 4 was fabricated in the same manner as the battery 1 except that heat treatment was performed on the positive electrode plate by bringing the positive electrode plate into contact with a heated roll at 170°C for 5 hours in (Formation of Positive Electrode).

### (Battery 5)

A battery 5 was fabricated in the same manner as the battery 1 except that heat treatment was performed on the positive electrode plate by bringing the positive electrode plate into contact with a heated roll at 175°C for 10 seconds in (Formation of Positive Electrode).

### (Battery 6)

A battery 6 was fabricated in the same manner as the battery 1 except that heat treatment was performed on the positive electrode plate by bringing the positive electrode plate into contact with a heated roll at 175°C for 5 hours in (Formation of Positive Electrode).

### (Battery 7)

A battery 7 was fabricated in the same manner as the battery 1 except that heat treatment was performed on the positive electrode plate by bringing the positive electrode plate into contact with a heated roll at 190°C for 5 seconds in (Formation of Positive Electrode).

### (Battery 8)

A battery 8 was fabricated in the same manner as the battery 1 except that heat treatment was performed on the positive electrode plate by bringing the positive electrode plate into contact with a heated roll at 190°C for 10 seconds in (Formation of Positive Electrode).

### (Battery 9)

A battery 9 was fabricated in the same manner as the battery 1 except that heat treatment was performed on the positive electrode plate by bringing the positive electrode plate into contact with a heated roll at 190°C for 5 hours in (Formation of Positive Electrode).

### (Battery 10)

A battery 10 was fabricated in the same manner as the battery 1 except that heat treatment was performed on the positive electrode plate by bringing the positive electrode plate into contact with a heated roll at 200°C for 3 seconds in (Formation of Positive Electrode).

### (Battery 11)

A battery 11 was fabricated in the same manner as the battery 1 except that heat treatment was performed on the positive electrode plate by bringing the positive electrode plate into contact with a heated roll at 200°C for 5 seconds in (Formation of Positive Electrode).

### (Battery 12)

A battery 12 was fabricated in the same manner as the battery 1 except that heat treatment was performed on the positive electrode plate by bringing the positive electrode plate into contact with a heated roll at 200°C for 5 hours in (Formation of Positive Electrode).

### (Battery 13)

A battery 13 was fabricated in the same manner as the battery 1 except that heat treatment was performed on the positive electrode plate by bringing the positive electrode plate into contact with a heated roll at 220°C for one second in (Formation of Positive Electrode).

### (Battery 14)

A battery 14 was fabricated in the same manner as the battery 1 except that heat treatment was performed on the positive electrode plate by bringing the positive electrode plate into contact with a heated roll at 220°C for 5 hours in (Formation of Positive Electrode).

### (Battery 15)

A battery 15 was fabricated in the same manner as the battery 1 except that heat treatment was performed on the positive electrode plate by bringing the positive electrode plate into contact with a heated roll at 250°C for 0.7 seconds in (Formation of Positive Electrode).

### (Battery 16)

A battery 16 was fabricated in the same manner as the battery 1 except that heat treatment was performed on the positive electrode plate by bringing the positive electrode plate into contact with a heated roll at 250°C for 5 hours in (Formation of Positive Electrode).

### (Battery 17)

A battery 17 was fabricated in the same manner as the battery 1 except that heat treatment was performed on the positive electrode plate by bringing the positive electrode plate into contact with a heated roll at 280°C for 0.4 seconds in (Formation of Positive Electrode).

### (Battery 18)

A battery 18 was fabricated in the same manner as the battery 1 except that heat treatment was performed on the positive electrode plate by bringing the positive electrode plate into contact with a heated roll at 280°C for 5 hours in (Formation of Positive Electrode).

### <Example 2>

### (Battery 19)

A battery 19 was fabricated in the same manner as the battery 1 except that heat treatment was performed on the positive electrode plate by bringing the positive electrode plate into contact with a heated roll at 250°C for 5 hours using aluminium foil (specifically, A1085-H18 containing no iron and produced by SUMIKEI ALUMINUM FOIL, Co., Ltd, hereinafter referred to as "A1085") having a thickness of 15 µm and made of high-purity aluminium as a positive electrode current collector in (Formation of Positive Electrode).

### <Comparative Example 1 >

### (Battery 20)

A battery 20 was fabricated in the same manner as the battery 1 except that heat treatment was not performed on the positive electrode plate in (Formation of Positive Electrode).

### (Battery 21)

A battery 21 was fabricated in the same manner as the battery 1 except that heat treatment was performed on the positive electrode plate by bringing the positive electrode plate into contact with a heated roll at 150°C for 5 hours in (Formation of Positive Electrode).

### (Battery 22)

A battery 22 was fabricated in the same manner as the battery 1 except that heat treatment was performed on the positive electrode plate by bringing the positive electrode plate into contact with a heated roll at 165°C for 20 seconds in (Formation of Positive Electrode).

### (Battery 23)

A battery 23 was fabricated in the same manner as the battery 1 except that heat treatment was performed on the positive electrode plate by bringing the positive electrode plate into contact with a heated roll at 170°C for 10 seconds in (Formation of Positive Electrode).

### (Battery 24)

A battery 24 was fabricated in the same manner as the battery 1 except that heat treatment was performed on the positive electrode plate by bringing the positive electrode plate into contact with a heated roll at 175°C for 5 seconds in (Formation of Positive Electrode).

### (Battery 25)

A battery 25 was fabricated in the same manner as the battery 1 except that heat treatment was performed on the positive electrode plate by bringing the positive electrode plate into contact with a heated roll at 190°C for 3 seconds in (Formation of Positive Electrode).

### (Battery 26)

A battery 26 was fabricated in the same manner as the battery 1 except that heat treatment was performed on the positive electrode plate by bringing the positive electrode plate into contact with a heated roll at 200°C for one second in (Formation of Positive Electrode).

### (Battery 27)

A battery 27 was fabricated in the same manner as the battery 1 except that heat treatment was performed on the positive electrode plate by bringing the positive electrode plate into contact with a heated roll at 220°C for 0.7 seconds in (Formation of Positive Electrode).

### (Battery 28)

A battery 28 was fabricated in the same manner as the battery 1 except that heat treatment was performed on the positive electrode plate by bringing the positive electrode plate into contact with a heated roll at 250°C for 0.4 seconds in (Formation of Positive Electrode).

### (Battery 29)

A battery 29 was fabricated in the same manner as the battery 1 except that heat treatment was performed on the positive electrode plate by bringing the positive electrode plate into contact with a heated roll at 280°C for 0.2 seconds in (Formation of Positive Electrode).

### <Comparative Example 2>

### (Battery 30)

A battery 30 was fabricated in the same manner as the battery 1 except that aluminium foil (A1085) having a thickness of 15 µm and made of high-purity aluminium was used as the positive electrode current collector and that heat treatment was not performed on the positive electrode plate in (Formation of Positive Electrode).

### (Battery 31)

A battery 31 was fabricated in the same manner as the battery 1 except that aluminium foil (A1085) having a thickness of 15 µm and made of high-purity aluminium was used as the positive electrode current collector and that heat treatment was performed on the positive electrode plate by bringing the positive electrode plate into contact with a heated roll at 190°C for 5 seconds in (Formation of Positive Electrode).

In the manner described above, the batteries 1-31 were fabricated. In the battery 20-29 of Comparative Example 1 and the batteries 30 and 31 of Comparative Example 2, cracks which do not cause breakage were observed in parts of the positive electrode in winding the positive electrode and the negative electrode with the separator interposed therebetween. However, these batteries were fabricated while keeping such cracks, and then were subjected to a measurement and a test which will be described later.

For each of the batteries 1-31, the tensile extension percentage of the positive electrode and the average crystal grain size of the positive electrode current collector were measured. The measurements were carried out in the following manner.

### <Measurement of Tensile Extension Percentage of Positive Electrode>

First, each of the batteries 1-31 was charged to a voltage of 4.25 V at a constant current of 1.45 A, and was charged to a current of 50 mA at a constant voltage. Then, each of the resultant batteries 1-31 was disassembled, and a positive electrode was taken out. This positive electrode was then cut to have a width of 15 mm and a length of 20 mm, thereby forming a sample positive electrode. Thereafter, one end of the sample positive electrode was fixed, and the other end of the sample positive electrode was extended along the longitudinal direction thereof at a speed of 20 mm/min. At this time, the length of the sample positive electrode immediately before breakage was measured. Using the obtained length and the length (i.e., 20 mm) before the extension of the sample positive electrode, the tensile extension percentage of the positive electrode was calculated. The tensile extension percentage of the positive electrode of each of the batteries 1-18 of Example 1 and the battery 19 of Example 2 was 3% or more. On the other hand, the tensile extension percentage of the positive electrode of each of the batteries 20-29 of Comparative Example 1 and the batteries 30 and 31 of Comparative Example 2 was less than 3%.

### <Measurement of Average Crystal Grain Size of Positive Electrode Current Collector>

The batteries 1-31 after charge and discharge were disassembled, and the positive electrodes were taken out. In each of the positive electrodes, the cross-section of the positive electrode current collector was processed with a focused ion beam (FIB) SMI9800 produced by SII NanoTechnology Inc. The processed cross-section was tilted, and an SIM thereof was observed to measure the crystal grain size of the positive electrode current collector. In this manner, the average crystal grain size was obtained.

The battery capacity was measured for each of the batteries 1-31 in the following manner.

### <Measurement of Battery Capacity>

Each of the batteries 1-31 was charged to a voltage of 4.2 V at a constant current of 1.5 A in an atmosphere of 25°C, and was charged to a current of 50 mA at a constant voltage of 4.2 V. Then, the battery was discharged to a voltage of 2.5 V at a constant current of 0.6 A, and the capacity of the battery at this time was measured.

For each of the batteries 1-31, a crush test, a foreign material entering test, and a positive electrode breakage evaluation were conducted in the following manner.

### <Crush Test>

First, each of the batteries 1-31 was charged to a voltage of 4.25 V at a constant current of 1.45 A, and was charged to a current of 50 mA at a constant voltage. Then, a round bar with a diameter of 6 mm was brought into contact with each of the batteries 1-31 at a battery temperature of 30°C, and was moved in the depth direction of the battery at a speed of 0.1 mm/sec. In this manner, each of the batteries 1-31 was crushed. The amount of deformation (hereinafter referred to as a "short-circuit depth") along the depth of the battery at the time of occurrence of short-circuit in each of the batteries 1-31 destroyed by crush was obtained.

### <Foreign Material Entering Test>

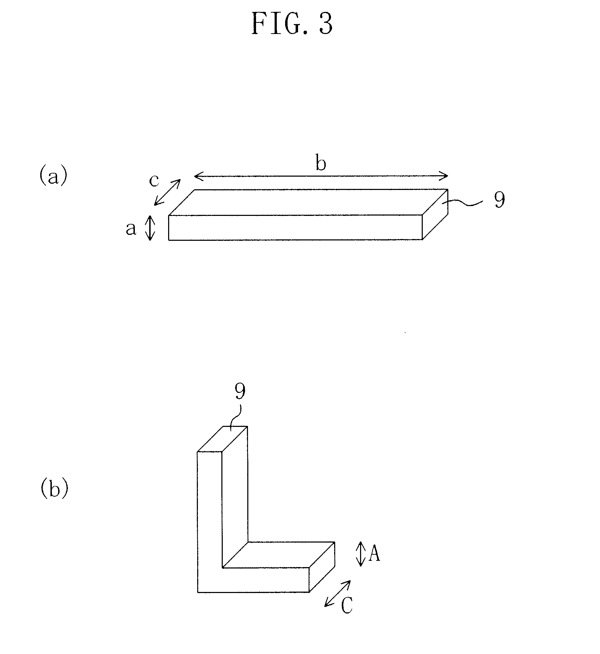

First, 20 cells of each of the batteries 1-31 were prepared. Then, each of the batteries 1-31 was charged to a voltage of 4.25 V at a constant current of 1.45 A, and was charged to a current of 50 mA at a constant voltage. Then, the electrode group was taken out from the battery case. Subsequently, a nickel plate 9 having a thickness of 0.1 mm (see, a in FIG. 3(a)), a length of 2 mm (see, b in FIG. 3(a)), and a width of 0.2 mm (see, c in FIG. 3(a)) was bent at an arbitrary point on the length of 2 mm, thereby obtaining a nickel plate 9 in the shape of L in cross section having a thickness of 0.1 mm (see, A in FIG. 3(b)) and a height of 0.2 mm (see, C in FIG. 3(b)). This nickel plate 9 was interposed between the positive electrode and the separator at respective portions thereof closest to the outermost circumference of the electrode group with the height direction of the nickel plate 9 oriented perpendicularly to the surfaces of the positive electrode and the separator. This electrode group in which the nickel plate 9 was interposed between the positive electrode and the separator was then placed in the battery case again. Subsequently, each of the batteries 1-31 was pressed at a pressure of 800 N/cm². Then, out of the 20 cells, the number of cells showing occurrence of short-circuit (i.e., the number of short-circuited cells per 20 cells) was counted for each of the batteries 1-31.

### <Positive Electrode Breakage Evaluation>

Using a winding core with a diameter of 3 mm, the positive electrode and the negative electrode were wound with the separator interposed therebetween with a tension of 1.2 kg applied, thereby preparing 50 cells of each of the batteries 1-31. In each of the batteries 1-31, the number of broken positive electrodes among the 50 cells (i.e., the number of cells showing breakage of the positive electrodes per 50 cells) was counted.

Table 1 shows the "average crystal grain size," the "capacity," the "short-circuit depth," the "short-circuit number," and "the number of breakages" in each of the batteries 1-18 of Example 1 and the battery 19 of Example 2. Table 2 shows the "average crystal grain size," the "capacity," the "short-circuit depth," the "short-circuit number," and "the number of breakages" in each of the batteries 20-29 of Comparative Example 1 and the batteries 30 and 31 of Comparative Example 2.

**[Table 1]**

| | Current Collector | Heat Treatment Condition | | Average Crystal Grain Size [µm] | Capacity [Ah] | Short-circuit Depth [mm] | Number of Short-circuits | Number of Breakages |
|---|---|---|---|---|---|---|---|---|
| | | [°C/sec] | [°C/h] | | | | | |
| Battery 1 | A8021 | 165/60 | | 2 | 3.10 | 8 | 0/20 | 0/50 |
| Battery 2 | A8021 | | 165/5 | 3 | 3.08 | 8 | 0/20 | 0/50 |
| Battery 3 | A8021 | 170/20 | | 3 | 3.10 | 8 | 0/20 | 0/50 |
| Battery 4 | A8021 | | 170/5 | 4 | 3.02 | 9 | 0/20 | 0/50 |
| Battery 5 | A8021 | 175/10 | | 4 | 3.10 | 9 | 0/20 | 0/50 |
| Battery 6 | A8021 | | 175/5 | 6 | 2.98 | 9 | 0/20 | 0/50 |
| Battery 7 | A8021 | 190/5 | | 4 | 3.10 | 9 | 0/20 | 0/50 |
| Battery 8 | A8021 | 190/10 | | 5 | 3.07 | 9 | 0/20 | 0/50 |
| Battery 9 | A8021 | | 190/5 | 8 | 2.92 | 9 | 0/20 | 0/50 |
| Battery 10 | A8021 | 200/3 | | 4 | 3.10 | 9 | 0/20 | 0/50 |
| Battery 11 | A8021 | 200/5 | | 5 | 3.07 | 9 | 0/20 | 0/50 |
| Battery 12 | A8021 | | 200/5 | 8 | 2.88 | 9 | 0/20 | 0/50 |
| Battery 13 | A8021 | 220/1 | | 4 | 3.10 | 9 | 0/20 | 0/50 |
| Battery 14 | A8021 | | 220/5 | 8 | 2.84 | 9 | 0/20 | 0/50 |
| Battery 15 | A8021 | 250/0.7 | | 4 | 3.10 | 9 | 0/20 | 0/50 |
| Battery 16 | A8021 | | 250/5 | 8 | 2.80 | 9 | 0/20 | 0/50 |
| Battery 17 | A8021 | 280/0.4 | | 4 | 3.10 | 9 | 0/20 | 0/50 |
| Battery 18 | A8021 | | 280/5 | 8 | 2.70 | 9 | 0/20 | 0/50 |
| Battery 19 | A1085 | | 250/5 | 3 | 2.80 | 9 | 0/20 | 0/50 |

**[Table 2]**

| | Current Collector | Heat Treatment Condition | | Average Crystal Grain Size [µm] | Capacity (Ah) | Short-circuit Depth [mm] | Number of Short-circuits | Number of Breakages |
|---|---|---|---|---|---|---|---|---|
| | | [°C/sec] | [°C/h] | | | | | |
| Battery 20 | A8021 | None | | 0.5 | 3.10 | 5~6 | 20/20 | 50/50 |
| Battery 21 | A8021 | | 150/5 | 0.5 | 3.10 | 5~6 | 20/20 | 50/50 |
| Battery 22 | A8021 | 165/20 | | 0.5 | 3.10 | 5~6 | 20/20 | 50/50 |
| Battery 23 | A8021 | 170/10 | | 0.5 | 3.10 | 5~6 | 20/20 | 50/50 |
| Battery 24 | A8021 | 175/5 | | 0.5 | 3.10 | 5~6 | 20/20 | 50/50 |
| Battery 25 | A8021 | 190/3 | | 0.5 | 3.10 | 5~6 | 20/20 | 50/50 |
| Battery 26 | A8021 | 200/1 | | 0.5 | 3.10 | 5~6 | 20/20 | 50/50 |
| Battery 27 | A8021 | 220/0.7 | | 0.5 | 3.10 | 5~6 | 20/20 | 50/50 |
| Battery 28 | A8021 | 250/0.4 | | 0.5 | 3.10 | 5~6 | 20/20 | 50/50 |
| Battery 29 | A8021 | 280/0.2 | | 0.5 | 3.10 | 5~6 | 20/20 | 50/50 |
| Battery 30 | A1085 | None | | 0.5 | 3.10 | 5~6 | 20/20 | 50/50 |
| Battery 31 | A1085 | 190/5 | | 0.5 | 3.10 | 5~6 | 20/20 | 50/50 |

### -Comparison between Example 1 and Comparative Example 1-

The batteries 1-18 of Example 1 and the batteries 20-29 of Comparative Example 1 will be compared hereinafter with reference to Tables 1 and 2.

In the batteries 1-18 each including the positive electrode subjected to heat treatment at a temperature higher than the softening temperature of the positive electrode current collector after rolling, the average crystal grain sizes of the positive electrode current collectors are 2 µm or more (i.e., 1.0 µm or more), and the advantage of reducing short-circuit caused by crush (hereinafter referred to as the "advantage A"), the advantage of reducing short-circuit caused by entering of a foreign material (hereinafter referred to as the "advantage B"), and the advantage of reducing breakage of the positive electrode (hereinafter referred to as the "advantage C") can be obtained.

On the other hand, in each of the battery 20 including the positive electrode not subjected to heat treatment after rolling and the battery 21 including the positive electrode subjected to heat treatment at a temperature lower than or equal to the softening temperature of the positive electrode current collector after rolling, the average crystal grain size of the positive electrode current collector is smaller than 1.0 µm, and the advantages A-C cannot be obtained.

Among the batteries 1, 2, and 22 each including the positive electrode subjected to heat treatment at 165°C (i.e., higher than the softening temperature of the positive electrode current collector) after rolling, the batteries 1 and 2 for which the heat treatment periods are relatively long (where the battery 1: 60 seconds and the battery 2: 5 hours), show the average crystal grain size of the positive electrode current collector of 2 µm or more (i.e., 1.0 µm or more), and can obtain the advantages A-C. On the other hand, in the battery 22 for which the heat treatment period is relatively short (where the battery 22: 20 seconds), the average crystal grain size of the positive electrode current collector is smaller than 1.0 µm, and the advantages A-C cannot be obtained. The results on the batteries 1, 2, and 22 show that if the heat treatment temperature is 165°C in heat treatment conditions, the heat treatment period preferably exceeds 20 seconds.

The results on the batteries 3, 4, and 23 show that if the heat treatment temperature is 170°C in the heat treatment conditions, the heat treatment period preferably exceeds 10 seconds.

The results on the batteries 5, 6, and 24 show that if the heat treatment temperature is 175°C in the heat treatment conditions, the heat treatment period preferably exceeds 5 seconds.

The results on the batteries 7, 8, 9, and 25 show that if the heat treatment temperature is 190°C in the heat treatment conditions, the heat treatment period preferably exceeds 3 seconds.

The results on the batteries 10, 11, 12, and 26 show that if the heat treatment temperature is 200°C in the heat treatment conditions, the heat treatment period preferably exceeds one second.

The results on the batteries 13, 14, and 27 show that if the heat treatment temperature is 220°C in heat treatment conditions, the heat treatment period preferably exceeds 0.7 seconds.

The results on the batteries 15, 16, and 28 show that if the heat treatment temperature is 250°C in the heat treatment conditions, the heat treatment period preferably exceeds 0.4 seconds.

The results on the batteries 17, 18, and 29 show that if the heat treatment temperature is 280°C in the heat treatment conditions, the heat treatment period preferably exceeds 0.2 seconds.

### -Comparison between Example 2 and Comparative Example 2-

The battery 19 of Example 2 and the batteries 30 and 31 of Comparative Example 2 will be compared hereinafter with reference to Tables 1 and 2.

In the battery 19 including the positive electrode subjected to heat treatment at a temperature higher than the softening temperature of the positive electrode current collector after rolling, the average crystal grain size of the positive electrode current collector is 2 µm or more (i.e., 1.0 µm or more), and the advantages A-C can be obtained.

On the other hand, in the battery 30 including the positive electrode not subjected to heat treatment after rolling and the battery 31 including the positive electrode subjected to heat treatment at a temperature lower than or equal to the softening temperature of the positive electrode current collector after rolling, the average crystal grain size of the positive electrode current collector is smaller than 1.0 µm, and the advantages A-C cannot be obtained.

### -Comparison between Example 1 and Example 2-

Since the softening temperature of A8021 is lower than the softening temperature of A1085, the battery 15 of Example 1 using A8021 as the positive electrode current collector can reduce the heat treatment period necessary for increasing the tensile extension percentage of the positive electrode to 3.0% or more, as compared to the battery 19 of Example 2 using A1085 as the positive electrode current collector (where the battery 15: 0.7 seconds, and the battery 19: 5 hours). Accordingly, the battery 15 can reduce covering of the positive electrode active material with the binder melted in the heat treatment, and thus, has a larger capacity than the battery 19.

Since the softening temperature of A8021 is lower than the softening temperature of the A1085, the heat treatment temperature necessary for increasing the tensile extension percentage of the positive electrode to 3.0% or more can be lower in the batteries 2, 4, 6, 9, 12, and 14 of Example 1 using A8021 as the positive electrode current collector than that in the battery 19 of Example 2 using A1085 as the positive electrode current collector (where the battery 2 :165°C, the battery 4: 170°C, the battery 6: 175°C, the battery 9: 190°C, the battery 12: 200°C, the battery 14: 220°C, and the battery 19: 250°C). Thus, the batteries 2, 4, 6, 9, 12, and 14 can reduce covering of the positive electrode active material with the binder melted in the heat treatment, and thus, have higher capacities than that of the battery 19.

As described above, the use of the positive electrode current collector containing iron and mainly containing aluminium can reduce the heat treatment period necessary for increasing the tensile extension percentage of the positive electrode to 3.0% or more and/or the heat treatment temperature necessary for increasing the tensile extension percentage of the positive electrode to 3.0% or more. Accordingly, it is possible to reduce covering of the positive electrode active material with the binder melted in the heat treatment performed after rolling, thereby reducing a decrease in the battery capacity.

### INDUSTRIAL APPLICABILITY

As described above, the present disclosure may be useful for devices such as household power supplies with, for example, higher energy density, power supplies to be installed in vehicles, and power supplies for large tools.

### DESCRIPTION OF REFERENCE CHARACTERS

- 1: battery case
- 1a: opening
- 2: sealing plate
- 3: gasket
- 4: positive electrode
- 4a: positive electrode lead
- 4A: positive electrode current collector
- 4B: positive electrode material mixture layer
- 5: negative electrode
- 5a: negative electrode lead
- 5A: negative electrode current collector
- 5B: negative electrode material mixture layer
- 6: separator (porous insulating layer)
- 7a: upper insulating plate
- 7b: lower insulating plate
- 8: electrode group
- 9: nickel plate
- a: thickness
- b: length
- c: width
- A: thickness
- C: height

## Claims

1. A nonaqueous electrolyte secondary battery, comprising:
a positive electrode including a positive electrode current collector and a positive electrode material mixture layer containing a positive electrode active material and a binder and provided on the positive electrode current collector;
a negative electrode;
a porous insulating layer interposed between the positive electrode and the negative electrode; and
a nonaqueous electrolyte, wherein
the positive electrode current collector contains aluminium, and
the positive electrode current collector has an average crystal grain size of 1.0 µm or more.

2. The nonaqueous electrolyte secondary battery of claim 1, wherein the positive electrode current collector has an average crystal grain size of 2.0 µm or more.

3. The nonaqueous electrolyte secondary battery of claim 1 or 2, wherein the positive electrode has a tensile extension percentage of 3.0% or more.

4. The nonaqueous electrolyte secondary battery of claim 1, wherein
the negative electrode has a tensile extension percentage of 3.0% or more, and
the porous insulating layer has a tensile extension percentage of 3.0% or more.

5. The nonaqueous electrolyte secondary battery of claim 1, wherein the positive electrode is a positive electrode including the positive electrode current collector which was rolled after being coated with positive electrode material mixture slurry containing the positive electrode active material and dried, and than was subjected to heat treatment at a predetermined temperature.

6. The nonaqueous electrolyte secondary battery of claim 1, wherein the positive electrode current collector contains iron and mainly contains aluminium.

7. The nonaqueous electrolyte secondary battery of claim 6, wherein an amount of iron contained in the positive electrode current collector is in the range from 1.20 wt. % to 1.70 wt. %, both inclusive.

8. A method for fabricating a nonaqueous electrolyte secondary battery including a positive electrode including a positive electrode current collector and a positive electrode material mixture layer containing a positive electrode active material and a binder and provided on the positive electrode current collector, a negative electrode, a porous insulating layer interposed between the positive electrode and the negative electrode, and a nonaqueous electrolyte, the method comprising the steps of:
(a) preparing the positive electrode;
(b) preparing the negative electrode; and
(c) either winding or stacking the positive electrode and the negative electrode with the porous insulating layer interposed therebetween after steps (a) and (b), wherein
step (a) includes the steps of
(a1) coating the positive electrode current collector with positive electrode material mixture slurry containing the positive electrode active material and the binder, and drying the slurry,
(a2) rolling the positive electrode current collector coated with the dried positive electrode material mixture slurry, and
(a3) performing heat treatment on the positive electrode current collector coated with the dried positive electrode material mixture slurry at a predetermined temperature after step (a2),
the positive electrode current collector contains aluminium, and
the positive electrode current collector has an average crystal grain size of 1.0 µm or more.

9. The method of claim 8, wherein in step (a3), the predetermined temperature is higher than a softening temperature of the positive electrode current collector.

10. The method of claim 8, wherein the positive electrode has a tensile extension percentage of 3.0% or more.

11. The method of claim 8, wherein the positive electrode current collector contains iron and mainly contains aluminium.

12. The method of claim 8, wherein in step (a3), a heated roll heated to the predetermined temperature and the positive electrode current collector coated with the dried positive electrode material mixture slurry are brought into contact with each other.

13. The method of claim 8, wherein the positive electrode current collector contains no iron, and
in step (a3),
the predetermined temperature is in the range from 250°C to 300°C, both inclusive, and
a period during which the heat treatment is performed is in the range from one hour to five hours, both inclusive.

14. The method of claim 8, wherein the positive electrode current collector contains iron, and
in step (a3),
the predetermined temperature is in the range from 160°C to 300°C, both inclusive, and
a period during which the heat treatment is performed is in the range from 0.1 second to 20 seconds, both inclusive.
